# EUROPEAN PATENT SPECIFICATION

(11) **EP 0 309 011 B1**
(45) Date of publication and mention of the grant of the patent: **19.05.1993**
(21) Application number: 88201533.2
(22) Date of filing: 17.01.1985
(51) Int. Cl.: A01B 29/04, A01B 29/06

(54) **A soil cultivating implement**
Bodenbearbeitungsmaschine
Machine à cultiver le sol

(30) Priority: 19.01.1984 NL 8400171
(43) Date of publication of application: 29.03.1989
(62) Divisional of application: 85200040.5
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 081 271
- FR-A- 2 372 583
- US-A- 2 667 362

## Description

The invention relates to a soil cultivating implement comprising a ground roller and a plurality of scrapers constructed and arranged so as to extend between groups of teeth carried by a curved surface of the roller in a soil-shedding manner, while a scraper has a profiled cross-section.

A suchlike implement is known from EP-A-0081271. The machine described herein comprises a roller and scrapers, apparently produced of sheet metal, partly being bent along a line parallel to the roller axis into one end portion prepared for mounting to a vertically, and opposed to the axis of the roller, extending bres part of a carrier, and one end portion prepared for scraping the roller, the upper side of this portion showing an open angle with the end portion prepared for fixation. The shedding end portion of said scraper comprises two lateral front parts which are further bend along straight lines extending between the pointed end of the scraper and a lateral end of the above mentioned bending line which devides the scraper into a portion for mounting and a shedding end portion.

The pointed end of the scraper is intended to contact the roller at the level of its central axis so that the said lateral front parts are bend inwardly up to an angle at which the front edges of it more or less match the curvature of the roller. For fabricating purposes a suchlike object is rather complicated, while, in use, a suchlike scraper is less attractive as the said bendings are liable to collapsing under severe soil working conditions, unless they are effectively hardened. Such a hardening, however, would furthermore lead to a cost rising treatment of this scraper. Also such a scraper will relatively quickly loose its profiled cross-section after wearing away so that working action of the scraper will quickly decrease. It is the object of the present invention to provide for a machine comprising a roller with scrapers which are at least relatively sturdy under all soil working conditions, which are relatively easy to produce and which will remain of the same shape after wearing away so that the scraping action will not be lost.

According to the invention this can be achieved in that the profiled cross-section is of a curved shape, the curvature being about an axis at least substantially orthogonal to the axis of rotation of the roller and being provided throughout the length of the said scraper.

For a better understanding of the invention, and to show how the same may be carried into effect, reference will now be made, by way of example, to the accompanying drawings, in which:
Figure 1 is a plan view of a soil cultivating implement in accordance with the invention, shown connected to the rear of an agricultural tractor,
Figure 2 is a cross-section of a roller which, according to the invention, can be part of the soil working implement in Figure 1, illustrating an embodiment of parts associated with the ground roller of the implement,
Figure 3 is a rear view as seen in the direction indicated by an arrow III in Figure 2,
Figure 4 is a view, to an enlarged scale, as seen between the arrows IV-IV in Figure 2,
Figure 5 is a view as seen in the direction indicated by an arrow V in Figure 4, and
Figure 6 is a view as seen in the direction indicated by an arrow VI in Figure 4.

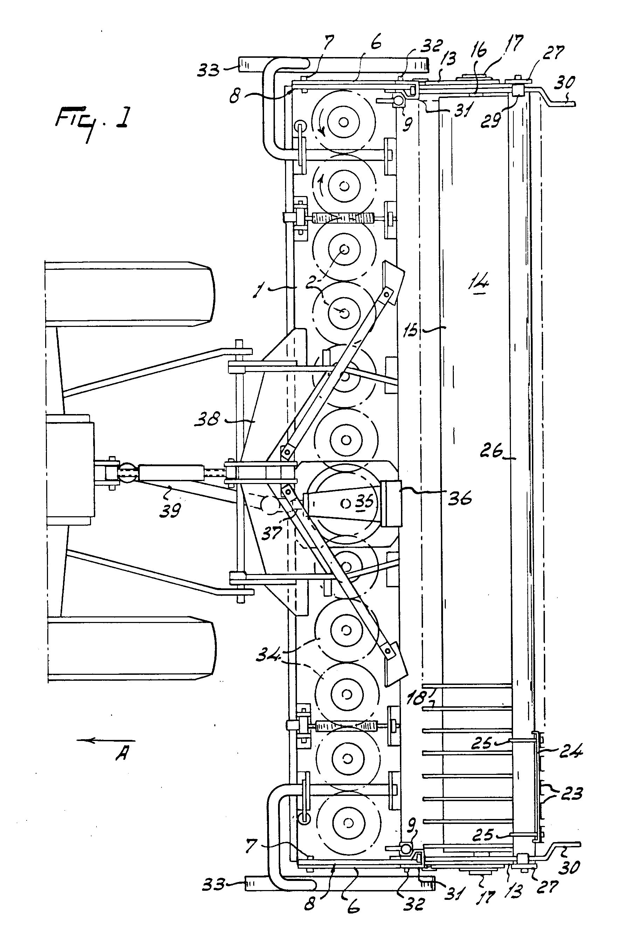

Referring to the accompanying drawings, in particular to Figure 1 thereof, the soil cultivating implement that is illustrated is in the form of a rotary harrow that is intended principally, but not exclusively, for use in the preparation of seed beds in previously worked soil. The implement has a hollow box-section frame portion 1 of elongate configuration that extends substantially horizontally transverse, and usually, as illustrated, substantially horizontally perpendicular, to the intended direction of operative travel of the implement that is indicated in Figures 1 and 2 of the drawings by an arrow A. A plurality, of which there are twelve in the example that is being described, of substantially vertical, or at least upwardly extending, shafts 2 are rotatably mounted in bearings carried by upper and lower walls of the hollow frame portion 1 so as to lie in a single row with their parallel longitudinal axis/axes of rotation spaced apart from one another at equal distances which very advantageously, but not essentially, have magnitudes of substantially 25 centimetres. Each shaft 2 projects downwardly from beneath the bottom of the hollow frame portion 1 and the downwardly projecting portions thereof is splined or otherwise keyed and has a corresponding soil working member that is generally indicated by the reference 3 firmly but releasably secured to it by means which include a washer, a nut co-operating with a short screw-threaded lowermost end region of the shaft 2 concerned and a split pin or other known means arranged to prevent the nut from working loose. Each soil working member 3 comprises a substantially horizontally disposed carrier 4 which has two substantially symmetrically identical arms that project more or less radially outwards from a hub thereof that is secured to the downwardly projecting portion of the corresponding shaft 2. The outer ends of the two arms of each carrier 4 define corresponding sleeve-like holders in which upper fastening portions of two soil working tools in the form of rigid metallic tines 5 are firmly but releasably secured with the aid of nuts which co-operate with upper screw-threaded regions of the fastening portions thereof.

The opposite ends of the hollow frame portion 1 are closed by corresponding side plates 6 that extend substantially vertically parallel to one another and to the direction A, each side plate 6 being generally rectangular in shape and carrying, at its upper leading corner with respect to the direction A, a strong pivot 7 that is substantially horizontally parallel to the row of soil working members 3, the two pivots 7 being in alignment. The leading end of an arm 8 is mounted on each pivot 7 so as to be upwardly and downwardly turnable about the substantially horizontal axis defined by the two pivots 7 and in such a way that the arm extends generally rearwardly from the corresponding pivot 7 alongside that surface of the respective plate 6 which faces the centre of the implement.

An adjustment mechanism 9 interconnects each arm 8 and the neighbouring frame portion side plate 6 at a location close to the curved rear edge of that side plate 6, one of the two mechanisms 9 being clearly visible in Figure 2 of the drawings from which it will be seen that said mechanism comprises a straight screw-threaded spindle having a manually operable crank handle at its upper end, a bracket secured to the side plate 6 concerned, means connecting a lowermost unthreaded end region of the spindle to said bracket in such a way that the spindle is rotatable relative to the bracket without being significantly axially displaceable with respect thereto and, finally, a block turnably connected to the corresponding arm 8 and being formed with a transverse internally screw-threaded bore through which the matchingly screw-threaded spindle extends. The block that has just been mentioned is turnable relative to the corresponding arm 8 and the lowermost unthreaded end of the spindle is turnable about a horizontal axis relative to the bracket carried by the corresponding side plate 6 and it will be apparent that, upon rotating the spindle in either direction, the arm 8 will be turned either upwardly or downwardly about the axis defined by the aligned pivots 7 relative to the frame portion 1 and the soil working members 3 which it rotatably carries. The construction of each adjustment mechanism 9 is such that the angular displacement of the corresponding arm 8 is infinitely variable between fixed limits.

A rear end region of each arm 8 integrally joins an obliquely downwardly and rearwardly inclined portion 10 in the region of the corresponding adjustment mechanism 9 and that portion 10, in turn, integrally joins a less steeply downwardly and rearwardly inclined portion 11 that is of gently tapering upright width from the inclined portion 10 to its rearmost free end. Each arm portion 11 has firmly but releasably secured to it, just rearwardly of its junction with the corresponding inclined portion 10, the upper end of a downwardly and rearwardly inclined roller support 13, it being noted that the front of the upper end of each support 13 is also provided with a guide clamp which includes a portion that overlaps the curved rear edge of the corresponding frame portion side plate 6 in such a way as to provide guidance designed to prevent lateral deviation and in such a way that a bolt incorporated therein can be tightened, when required, to clamp the arm assembly 8, 10, 11 firmly but releasably to the associated side plate 6 to relieve the corresponding adjustment mechnism 9 of most of the stress which it would otherwise be subject to during the use of the implement. A ground roller that is generally indicated by the reference 14 is mounted in a freely rotatable manner between lowermost and rearmost end regions of the two supports 13, said roller 14 having substantially horizontally aligned stub shafts 16 at its opposite ends which stub shafts 16 are rotatably received in horizontally aligned bearings arranged in corresponding housings 17 (Figures 1 and 3), the common longitudinal axis of the two stub shafts 16 being the intended axis of rotation a of the roller 14. The roller 14 is, in the embodiment that is being described, a so-called "packer" roller and comprises a hollow cylinder 15 of circular cross-section whose longitudinal axis coincides with the axis a that has just been mentioned. Preferably, but note essentially, the external diameter of the roller cylinder 15 has a magnitude of not less than 20 centimetres and not more than 30 centimetres. The external surface of the cylinder 15 is provided, at regularly spaced apart intervals along its length, with a plurality of groups or crowns of teeth 18, each group or crown being contained in a corresponding substantially vertical plane that is perpendicular to the axis a but parallel or substantially parallel to the direction A and to each of the other groups or crowns. Each group or crown comprises ten of the teeth 18, the latter being formed in integral pairs (see Figure 2) and each pair being spot-welded or otherwise rigidly secured to the outer surface of the cylinder 15.

A scraper 19 is arranged between each successively neighbouring pair of groups or crowns of teeth 18 at the rear of the roller cylinder 15 with respect to the direction A in order to keep the roller 14 as free as possible from adhering mud, other accumulations of soil, remnants of previous crops and other agricultural debris that, if not removed, would interfere with the action of the roller 14 and thus prevent the implement from forming a well crumbled seed bed having a gently but smoothly compacted surface. Each scraper 19 is in the form of an oblong plate and may advantageously be formed from metal or other strong material having some resiliency. Advantageously, as can be seen best in Figure 2 of the drawings, the leading edges, with respect to the direction A, of the scrapers 19 are arranged very close to, but just clear of actual contact with, the outer curved surface of the cylinder 15, between the groups or crowns of teeth 18, so that said scrapers 19 will not impede rotation of the roller 14 except, momentarily, to a small extent when a stubborn clod of soil, jammed stone or the like is dislodged. The locations at which the leading ends of the scrapers 19 are very close to the outer surface of the roller cylinder 15 are spaced perpendicularly beneath an imaginary horizontal plane containing the axis a by a distance which is not less than 1/6 of the outer diameter of the cylinder 15.

Each end of the tubular carrier 26 that extends subtantially horizontally parallel to the axis of rotation a of the roller 14 is provided with corresponding diametrically opposed upwardly and downwardly directed lugs 27. Each lower lug 27 is pivotally connected, by a corresponding horizontal pivot pin, to the rearmost end of the rear portion 11 of the corresponding arm 8, said pivot pin defining an axis which is parallel to the axis of rotation a of the roller 14. The top of each upwardly projecting lug 27, on the other hand, is turnably connected by a further parallel pivot to a block formed with an internally screw-threaded transverse bore. This bore receives the matchingly screw-threaded shank of a spindle 30, that is more or less horizontally parallel to the direction A, and that has a manually operable crank handle at its rearmost end. The leading end of each spindle 30 is rotatably but axially immovably received in a socket forming the base of a fork 31 whose limbs are connected, by a further pivot pin 32 that is substantially parallel to the axis a, to an integral upward projection at the junction between the leading end of the inclined portion 10 of the corresponding arm and the rearmost end of that arm 8, proper.

Two shield plates 33 that, during operation, extend substantially vertically parallel to one another and to the direction A lie immediately beyond the opposite ends of the single row of rotary soil working members 3 and function principally to co-operate with the neighbouring soil working members 3 at the opposite ends of said row in cultivating the soil to substantially the same thorough extent as is produced by the co-operation between neighbouring pairs of members 3 at locations closer to the centre of the implement. In addition, however, the shield plates 33 prevent the rapidly moving tines 5 of the soil working members 3 from flinging stones and other hard objects laterally of the path of travel of the implement so that the danger of damage or injury that might otherwise be caused in this way is very greatly reduced, if not-entirely eliminated. Each shield plate 33 is carried by a corresponding single arm having a portion that is mounted on top of the hollow frame portion 1, at a short distance inwardly from the neighbouring end of that frame portion, so as to be turnable about a substantially horizontal axis that is substantially parallel to the direction A. This enables each shield plate 33, whose lowermost edge is shaped to slide forwardly over the ground surface, to turn upwardly and downwardly to match undulations in the ground that may be met with during operative progress in the direction A and also allows each shield plate to be turned upwardly and inwardly through substantially 180° so that it can occupy an inoperative transport position in which it is inverted on top of the hollow frame portion 1.

Each shaft 2 is provided, inside the hollow frame portion 1, with a corresponding straight- or spur-toothed pinion 34, the size of each pinion 34 being such that its teeth are in mesh with those of the or each neighbouring pinion 34 in the single row, in this embodiment, of twelve such pinions 34. Due to this inter-meshing relationship between the pinions 34, each shaft 2, soil working member 3 and pinion 34 will revolve in the opposite direction to the or each immediately neighbouring similar assembly, these directions of rotation being indicated for two such assemblies at the top of Fig. 1 of the drawings.

One of the centre pair of shafts 2 in the single row of twelve such shafts has an upward extension through the top of the hollow frame portion 1 into a gearbox 35 that is firmly secured to the top of said frame portion 1 by bolts. Shafts and bevel pinions inside the gearbox 35 place the upward shaft extension that has just been mentioned in driven connection with a rotary input shaft 37 of the gearbox whose leading splined or otherwise keyed end projects forwardly in substantially the direction A from the front thereof where it can be placed in driven connection with the rear power take-off shaft of an agricultural tractor or other operating vehicle through the intermediary of a telescopic transmission shaft 39, which is of a construction that is known per se, having universal joints at its opposite ends. The rear of the gearbox 35, with respect to the direction A, is provided with a change-speed gear 36 whose construction and operation are not the subject of the present invention. It suffices to say that, beneath a readily removable cover of the change-speed gear 36, two splined or otherwise keyed shaft ends are accessible and carry the matchingly internally splined or otherwise keyed hubs of a pair of inter-meshing straight- or spur-toothed pinions to give a pre-determined transmission ratio between the two shafts concerned. The two pinions can be interchanged in position on the shaft ends, or can be exchanged for at least one other pair of co-operating pinions of different sizes, to give any chosen one of a number of different transmission ratios thus enabling the rotary soil working members 3 to be revolved at any chosen one of a number of different speeds without having to alter the speed of driving rotation that is applied to the forwardly projecting rotary input shaft 37 of the gearbox 35.

The top and front of the hollow frame portion 1, with respect to the direction A, is provided with a coupling member or trestle 38 that is of substantially isosceles triangular configuration as seen in either front or rear elevation and this coupling member or trestle 38 is constructed and arranged to connect the implement to a three-point lifting device or hitch at the rear of the agricultural tractor or other vehicle which is both to move the implement forwardly in the direction A and to operate its soil working members 3. The coupling member or trestle 38 and the three-point lifting device or hitch may both be of a known kind and the arrangement that has just been described is illustrated somewhat diagrammatically in Fig. 1 of the drawings. Locations at substantially the apex of the coupling member or trestle 38 are strengtheningly connected by steeply downwardly and rearwardly divergent tie beams to widely spaced-apart locations at the top and rear of the hollow frame portion 1.

In the use of the soil cultivating implement that has been described in forming a seed bed or otherwise cultivating the ground, its coupling member or trestle 38 is connected to the three-point lifting device or hitch at the rear of the agricultural tractor or other vehicle that is to move and operate the implement and the rotary input shaft 37 of the implement gearbox 35 is placed in driven connection with the rear power take-off shaft of the same tractor or other vehicle using the known telescopic transmission shaft 39 that has universal joints at its opposite ends. Adjustments that may, if necessary, be made before work commences include setting the maximum depth to which the tines 5 of the soil working members 3 will be able to penetrate into the ground by raising or lowering the bodily level of the ground roller 14 relative to that of the frame portion 1 and soil working members 3 using the two adjusting mechanisms 9 to change that bodily level. The transmission ratio established in the change-speed gear 36 may also, if required, be altered to bring about a faster or slower speed of rotation of the soil working members 3. These adjustments will usually be made in the light of the nature and condition of the soil that is to be cultivated by the implement and the particular purpose for which that soil is required after its cultivation. As the implement moves operatively in the direction A, each soil working member 3 will work a corresponding strip of soil that extends in the same direction and, since the effective working width of each member 3 is the same as, or a little greater than, the distance between the axes of rotation of neighbouring members 3, these individual strips will overlap, or at least adjoin, one another to produce a single broad strip of worked soil extending in the direction A and having a width of substantially, although not necessarily exactly, three metres when the preferred dimensions that have been referred to above are employed. It will be apparent that a greater or smaller working width could be produced by employing a larger or smaller number of the rotary soil working members 3.

The so-called packer roller 14 which forms part of the implement that has been described by way of example is particularly advantageous when seed beds are to be prepared in soil that is somewhat heavy in nature. The teeth 18 of the roller 14 project into the soil when the implement is in use and cause the roller 14 to be revolved around its own axis a. The outer curved surface of the roller cylinder 15 gently compresses the soil that has immediately previously been crumbled by the tines 5 of the members 3 and thus the freshly worked soil is gently consolidated into a seed bed whose structure is substantially optimum for the subsequent sowing and later germination of seeds.

Figures 2 to 6 of the drawings illustrate a still further embodiment in which the two arms 52 of the Figures 2 and 3 are provided, at their rear ends, with two support arms 60 that are bolted or otherwise rigidly secured to the arms 52 so as to project downwardly and rearwardly therefrom, with respect to the direction A, at a steeper angle of inclination to the horizontal than are the corresponding roller supports 13 (see Fig. 2). The lower ends of the two support arms 60 are interconnected by a carrier 40 of the same construction as the carrier 40 of the embodiment of Figures 5 and 6 of the drawings but said carrier 40 being disposed, in this embodiment, so that its limbs project principally downwardly and rearwardly to some extent from the uppermost web or base thereof. The plate 42 that is bolted to the perpendicularly bent-over rims of the carrier limbs also has secured to it by the same bolts a plurality of flat scrapers 61 whose leading ends, with respect to the direction A, are located at the same horizontal level, relative to that of the horizontal level of the roller axis a, as has been mentioned above in respect of the preceding embodiments.

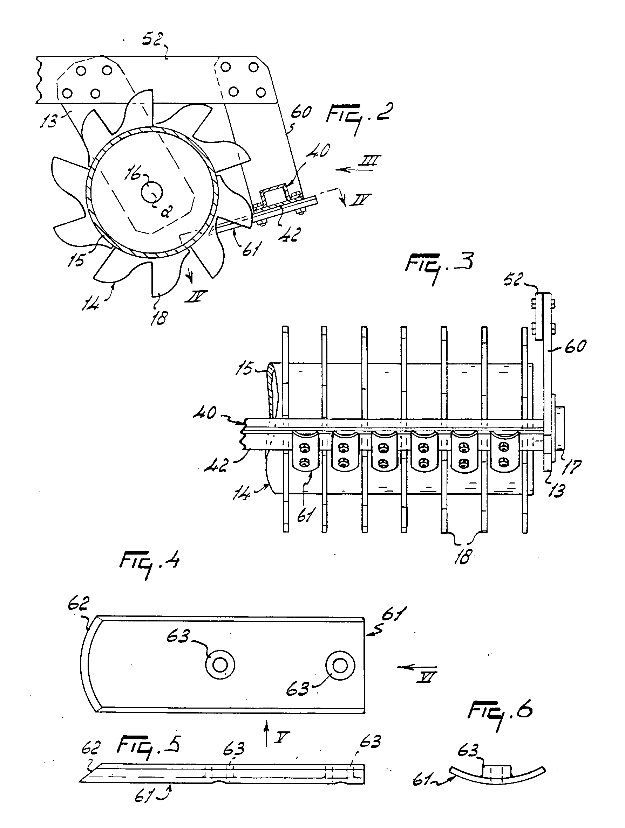

Each scraper 61 is again substantially oblong in shape but the leading end thereof which is disposed in close proximity to the roller cylinder 15, is shaped as an oblique convex rim 62 (Figs. 4 and 5). In addition, each scraper 61 is of arcuately curved cross-section and is so connected to the carrier 40 that the convex side of that curvature faces upwardly and forwardly with the convex rim 62 foremost and lowermost. The convex side of each scraper 61 faces downwardly and rearwardly and the radius of curvature of the convex rim 62 at the leading lower end thereof is such that said curvature matches the curvature of the surface of the roller cylinder 15 at the particular inclination of the scraper 61 to that cylinder surface. The curved or hollow cross-sectional shape of each scraper 61 considerably increases the strength of that scraper as regards its resistance to bending deformation. The concave side of each scraper 61 is fixedly provided with two spacing sleeves 63 that surround the holes which receive the bolts that secure the scraper 61 to the plate 42 and to the carrier 40. Although not illustrated, any of the described embodiments can simply be modified so that one lever mechanism adjusts the position of some of the scrapers whilst a further lever mechanism adjusts the position of the remainder of the total number of scrapers.

## Claims

1. A soil cultivating implement comprising a ground roller (14) and a plurality of scrapers (61) constructed and arranged so as to extend between groups of teeth carried by a curved surface (15) of the roller (14) in a soil-shedding manner, while a scraper (61) has a profiled cross-section, characterized in that the profiled cross-section is of a curved shape, the curvature being about an axis at least substantially orthogonal to the axis of rotation of the roller and being provided throughout the length of the said scraper (61).

2. A soil cultivating implement as claimed in claim 1, characterized in that said scraper (61) is mounted in its operative position in the implement in such a way that the concave side thereof is uppermost.

3. A soil cultivating implement as claimed in claim 1 or 2, characterized in that the leading end of the scraper (61) with respect to the intended direction of operative travel of the implement is shaped in such a way as to match the curvature of the said curved surfaces (15) of the ground roller (14), so that the said shaped end lies closely adjacent to that curved surface (15).

## Patentansprüche

1. Bodenbearbeitungsmaschine mit einer Bodenwalze (14) und mehreren Abstreifern (61), die zum Ablösen von Erde derart ausgebildet und angeordnet sind, daß sie sich bis zwischen Gruppen von an einer gekrümmten Fläche (15) der Walze (14) angeordneten Zähnen erstrecken, wobei ein Abstreifer (61) einen profilierten Querschnitt aufweist,
dadurch gekennzeichnet, daß der profilierte Querschnitt von gekrümmter Form ist, daß die Achse der Krümmung zumindest im wesentlichen orthogonal zu der Drehachse der Walze angeordnet ist, und daß der Abstreifer (61) über seine gesamte Länge den profilierten Querschnitt aufweist.

2. Bodenbearbeitungsmaschine nach Anspruch 1,
dadurch gekennzeichnet, daß der Abstreifer (61) in seiner Arbeitslage derart an der Maschine angeordnet ist, daß seine konkave Seite nach oben gewandt ist.

3. Bodenbearbeitungsmaschine nach Anspruch 1 oder 2,
dadurch gekennzeichnet, daß das vordere Ende des Abstreifers (61) in bezug auf die Arbeitsrichtung der Maschine derart gestaltet ist, daß es sich der Krümmung der gekrümmten Fläche (15) der Bodenwalze (14) anpaßt, so daß das derart gestaltete Ende dicht neben der gekrümmten Fläche (15) liegt.

## Revendications

1. Machine pour cultiver le sol comprenant un rouleau (14) reposant au sol et une pluralité de râcleurs (61) construits et disposés de manière à s'étendre entre des groupes de dents portés par une surface incurvée (15) du rouleau (14) de manière à dégager la terre, tandis qu'un râcleur (61) a une section transversale profilée,
**caractérisée** en ce que la section transversale profilée a une forme incurvée, la courbure étant autour d'un axe au moins sensiblement perpendiculaire à l'axe de rotation du rouleau et étant prévue sur toute la longueur dudit râcleur (61).

2. Machine pour cultiver le sol selon la revendication 1, caractérisée en ce que ledit râcleur (61) est monté en sa position de travail dans la machine de telle manière que son côté concave est tourné vers le haut.

3. Machine pour cultiver le sol selon la revendication 1 ou 2, caractérisée en ce que le bord d'attaque du râcleur (61), par rapport au sens de marche prévu pour le travail de la machine, est conformé de manière à épouser la courbure desdites surfaces incurvées (15) du rouleau (14) reposant au sol, de telle sorte que ledit bord d'attaque de râcleur se trouve étroitement adjacent à cette surface incurvée (15).
